Europäisches Patentamt

European Patent Office

Office européen des brevets

(19)

(11) **EP 0 999 466 A1**

(12) **EUROPÄISCHE PATENTANMELDUNG**

(43) Veröffentlichungstag:
   **10.05.2000 Patentblatt 2000/19**

(51) Int Cl.⁷: **G02C 1/06**

(21) Anmeldenummer: **99121035.2**

(22) Anmeldetag: **21.10.1999**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **04.11.1998  DE 19850863**

(71) Anmelder: **Hemaris GmbH**
   **7000 Chur (CH)**

(72) Erfinder: **Anger, Wilhelm**
   **5020 Salzburg (AT)**

(74) Vertreter: **Grams, Klaus Dieter, Dipl.-Ing. et al**
   **Patentanwaltsbüro**
   **Tiedtke-Bühling-Kinne & Partner**
   **Bavariaring 4**
   **80336 München (DE)**

(54) **Mittelteil einer Vollrandfassung für eine Brille sowie Verfahren zur Herstellung eines Brillen-Mittelteils**

(57)   Das Mittelteil einer Vollrandfassung für eine Brille umfaßt einen linken Vollrand (2) zum Aufnehmen eines linken Brillenglases, einen rechten Vollrand (4) zum Aufnehmen eines rechten Brillenglases, eine die beiden Vollränder verbindende Brücke (6) sowie zwei Backen (8, 10). Die beiden Vollränder, die Brücke und die beiden Backen sind einstückig miteinander aus einem Kunststoff ausgebildet. Die beiden Vollränder (2, 4) sind flexibel und werden durch ein geschlossenes, elastisches Band gebildet. Das Mittelteil der Vollrandfassung wird zu einem Brillen-Mittelteil mit zwei Brillengläsern zusammengefügt, deren äußere Umfangslinien ein gewisses Übermaß im Vergleich zu den inneren Konturlinien der beiden Vollränder haben, so daß die Vollränder am Brillen-Mittelteil um die Brillengläser gespannt sind und sich ihre Gestalt der Scheibenform der Brillengläser anpaßt.

Fig.1

EP 0 999 466 A1

**Beschreibung**

Die Erfindung bezieht sich auf ein Mittelteil einer Vollrandfassung für eine Brille gemäß dem Oberbegriff von Patentanspruch 1 sowie ein Verfahren zur Herstellung eines Brillen-Mittelteils gemäß dem Oberbegriff von Anspruch 18.

Ein Mittelteil mit den Merkmalen des Oberbegriffs von Anspruch 1 ist bekannt. Es wird üblicherweise mit zwei Bügeln zu einer Fassung für eine Brille zusammengebaut, wobei die Bügel mit Hilfe von an den Backen angeordneten Gelenken mit dem Mittelteil gelenkig verbunden werden. Wenn nicht nur das Mittelteil sondern auch die Bügel aus Kunststoff bestehen, handelt es sich um eine Kunststoffassung. Nachdem in das Mittelteil die beiden Brillengläser eingesetzt worden sind, umgibt jeder der beiden Fassungsränder des Mittelteils das jeweilige Brillenglas vollständig entlang seines gesamten Umfanges. Ein solcher das Brillenglas entlang seines gesamten Umfanges vollständig umgebender Fassungsrand wird üblicherweise und auch hier als "Vollrand" bezeichnet. Dementsprechend wird eine Brillenfassung, deren Mittelteil Vollränder aufweist, als Vollrandfassung bezeichnet. Einer der Vorteile der Vollrandfassung liegt darin, daß die Brillengläser an ihren Rändern vor Beschädigungen durch Stöße oder dergleichen geschützt sind.

Das bekannte Mittelteil wird üblicherweise durch Pressen einer Kunststoffmasse in einem entsprechenden Formwerkzeug hergestellt. Ein häufig hierfür verwendeter Kunststoff ist ein Epoxydharz, das unter der Bezeichnung Optyl gehandelt wird. Die Gestalt des bekannten Mittelteils ist durch das Formwerkzeug vorgegeben. Aufgrund der Eigenschaften der für das bekannte Mittelteil üblicherweise verwendeten Kunststoffe in Verbindung mit den Abmessungen des Mittelteils ist dieses ein verhältnismäßig starrer Körper, dessen Gestalt im wesentlichen unveränderbar ist. Der Verlauf der inneren Konturlinien der beiden Vollränder bestimmt die sogenannte Scheibenform, d.h. den Verlauf bzw. die Gestalt der äußeren Umfangslinien der in die Vollränder einzusetzenden Brillengläser. Die Scheibenform des linken Brillenglases und die Scheibenform des rechten Brillenglases sind in der Regel nicht deckungsgleich. Sie sind jedoch bei herkömmlichen Brillen mit einer Vollrandfassung stets bezüglich einer Mittelsenkrechten zueinander symmetrisch. Daher ist es in der Brillenoptik üblich, zwischen der Scheibenform des linken Brillenglases und der des rechten Brillenglases nicht zu unterscheiden, sondern diese als ein und dieselbe Scheibenform zu betrachten. Im Zuge der Herstellung einer Brille wird an zwei Brillen-Rohgläsern die durch die Vollränder des Mittelteils der Brillenfassung vorgegebene Scheibenform derart ausgebildet, daß diese mit dem Verlauf der inneren Konturlinie des jeweiligen Vollrandes übereinstimmt, so daß die Vollränder die Brillengläser aufnehmen und halten können. Da durch ein bekanntes Mittelteil der hier betrachteten Art die Scheibenform vorgegeben ist, ist es notwendig, für voneinander verschiedene Scheibenformen entsprechend voneinander verschiedene Mittelteile herzustellen.

Bekannt sind auch randlose Fassungen für Brillen, die keine Fassungsränder aufweisen. Bei derartigen Fassungen sind die Brillengläser konstruktiver Bestandteil des Mittelteils der Fassung. Die Backen und die Brücke einer Brille mit einer randlosen Fassung sind durch Verschraubungen, Verklebungen oder dergleichen mit den Brillengläsern verbunden. Die Scheibenform ist durch eine randlose Fassung nicht vorgegeben. Vielmehr können Brillengläser mit unterschiedlichen Scheibenformen mit Hilfe gleicher Brücken und Backen zu voneinander verschiedenen Brillen montiert werden. Bei einer Brille mit einer randlosen Fassung sind jedoch die Ränder der Brillengläser nicht geschützt. Ferner unterliegen die Brillengläser dort, wo sie mit der Brücke und den Backen verbunden sind, örtlich erhöhter mechanischer Beanspruchung, die zu erhöhter Bruchgefahr führt.

Bekannt sind ferner Teilrandfassungen, die die Brillengläser nur teilweise einfassen. Das Mittelteil einer solchen Teilrandfassung weist zwei von der Brücke zur jeweiligen Backe verlaufende Teilränder auf, die das Brillenglas entlang eines Teils seines Umfanges aufnehmen. Entlang des übrigen Teils des Umfanges des Brillenglases verläuft ein Kunststoffaden, der an den beiden Enden des jeweiligen Teilrandes mit Hilfe von Verankerungsvorrichtungen verankert ist. Durch eine solche Teilrandfassung ist die Scheibenform zumindest an dem vom Teilrand eingefaßten Abschnitt des Randes des Brillenglases vorgegeben.

Der Erfindung liegt die Aufgabe zugrunde, das gattungsgemäße Mittelteil einer Vollrandfassung derart weiterzubilden, daß es nicht nur für eine bestimmte Scheibenform der Brillengläser geeignet ist. Ferner liegt der Erfindung die Aufgabe zugrunde, ein neues Verfahren zur Herstellung eines Brillen-Mittelteils zu schaffen. Es sollen die Vorteile eines Fassungs-Mittelteils mit zwei Vollrändern, insbesondere die Schutzfunktion für die Brillengläser und die vergleichsweise geringe mechanische Beanspruchung derselben, weitgehend beibehalten werden. Zugleich soll dennoch die Notwendigkeit entfallen, für jede gewünschte Scheibenform der Brillengläser ein ausschließlich für diese Scheibenform geeignetes Fassungs-Mittelteil fertigen zu müssen.

Diese Aufgaben werden erfindungsgemäß durch das Mittelteil gemäß Patentanspruch 1 sowie das Verfahren gemäß Patentanspruch 18 gelöst.

Die Flexibilität bzw. Biegsamkeit der Vollränder ermöglicht es, deren Gestalt ohne Zerstörung des Mittelteils in weiten Grenzen zu verändern. Dies bedeutet, daß der Verlauf der inneren Konturlinie der Vollränder unterschiedlichen Scheibenformen angepaßt werden kann, so daß eine von zahlreichen unterschiedlichen Scheibenformen gewählt werden kann, sofern bei diesen Scheibenformen die Länge ihrer Umfangslinie gleich ist. Es ist somit durch das Mittelteil nicht mehr die Scheibenform, d.h. der Verlauf der Umfangslinie, sondern die Länge der Umfangslinie der Brillengläser vorgegeben. Im Zuge der Fertigung einer Brille mittels des erfindungsgemäßen Mittelteils werden die zwei Brillengläser mit der gewählten Scheibenform in die Vollränder eingesetzt, wobei die Brillengläser ihre Scheibenform den Vollrändern aufprägen. Das erfindungsgemäße Mittelteil ermöglicht es somit, mit dem gleichen Mittelteil Brillen mit voneinander verschiedenen Scheibenformen herzustellen. Die Notwendigkeit, für jede gewünschte Scheibenform ein nur für diese geeignetes Mittelteil anzufertigen, besteht somit bei dem erfindungsgemäßen Mittelteil nicht.

Da bei dem erfindungsgemäßen Mittelteil die Vollränder flexibel sind, d.h. eine geringe Formsteifigkeit haben und Krafteinwirkungen von außen nur einen geringen Widerstand entgegensetzten, ist vorgesehen, daß die Vollränder um die Brillengläser gespannt werden und dadurch unter Vorspannung auf den Rändern der Brillengläser sitzen und von diesen Rändern in ihrer Sollage gehalten werden. Zu diesem Zweck wird das erfindungsgemäße Mittelteil mit Brillengläsern kombiniert, bei denen die Länge der Umfangslinie ein gewisses Übermaß von beispielsweise 3% bezüglich der Länge der inneren Konturlinie der Vollränder hat. Beim Einsetzen des Brillenglases in den zugeordneten Vollrand wird daher der Vollrand in seiner Umfangsrichtung gedehnt. Erfindungsgemäß ist das den jeweiligen Vollrand bildende Band elastisch, so daß diese Dehnung im elastischen Bereich erfolgen kann und die entsprechenden elastischen Spannungen dauerhaft bestehen bleiben.

Ferner ist das den jeweiligen Vollrand bildende Band erfindungsgemäß geschlossen ausgebildet. Dies bedeutet, daß das Band und somit der Vollrand einen ununterbrochenen Ring ohne eine Fuge oder dergleichen darstellt, so daß die im Vollrand aufgrund der Vorspannung auftretenden Zugkräfte in Umfangsrichtung sich innerhalb des Bandes bzw. Vollrandes kompensieren und nicht durch andere Elemente als den Vollrand selber aufgenommen werden müssen. Der Zusammenhalt des Vollrandes ist somit vollständig durch die geschlossene Ausbildung des Bandes gewährleistet. Weder die Brücke noch die am Vollrand angeordnete Backe brauchen für den Zusammenhalt des Vollrandes zu sorgen. Brücke und Backen sind daher von den im Vollrand aufgrund seiner Vorspannung herrschenden Zugkräften entlastet. Die geschlossene Ausbildung des Bandes erübrigt es, solche Mittel zum Schließen des Vollrandes vorzusehen, wie sie beispielsweise bei Metall-Vollrandfassungen in Form von sogenannten Schließblöcken zur Anwendung kommen. Auch Verankerungsvorrichtungen, wie sie bei Teilrandfassungen zur Verankerung der bei diesen vorgesehenen Kunststoffäden notwendig sind, sind bei dem erfindungsgemäßen Mittelteil durch die geschlossene Ausbildung des Bandes vermieden.

Wie sich aus der vorstehenden Erläuterung der Erfindung ergibt, besteht einer der mit der Erfindung erzielten Vorteile darin, daß durch das Mittelteil nicht mehr die Scheibenform der Brillengläser vorgegeben ist, so daß unter Verwendung des gleichen Mittelteils Brillen hergestellt werden können, die sich durch ihre Scheibenform unterscheiden. Dies ist bei der Erfindung erreicht, ohne daß auf die Vollränder verzichtet wird, so daß deren Vorteile, insbesondere die Schutzfunktion für die Brillengläser und die vergleichsweise geringe mechanische Beanspruchung derselben, auch bei der Erfindung vorhanden sind.

Da die beiden Vollränder flexibel sind und durch ein geschlossenes, elastisches Band gebildet sind, das an der fertigen Brille um das jeweilige Brillenglas gespannt ist, können bei dem erfindungsgemäßen Mittelteil die Vollränder eine im Vergleich zu herkömmlichen Kunststoff-Vollrandfassungen geringere Querschnittsfläche und ein dementsprechend geringeres Volumen haben. Dadurch ermöglicht es die Erfindung, das Mittelteil mit sehr geringem Gewicht herzustellen, so daß die unter Verwendung des erfindungsgemäßen Mittelteils hergestellte Brille leicht ist und dementsprechend der Tragekomfort hoch ist.

Obwohl das Mittelteil aus Kunststoff besteht, ist es durch die erfindungsgemäße Ausbildung ermöglicht, die Vollränder ähnlich dünn wie bei Metall-Vollrandfassungen auszubilden, so daß eine Brille mit dem erfindungsgemäßen Mittelteil den Vorteil einer ähnlich geringen Gesichtsfeldeinschränkung wie eine Brille mit einer Metall-Vollrandfassung hat, ohne daß dafür der Nachteil einer Metall-Vollrandfassung, nämlich der aufwendige Herstellungsvorgang, in Kauf genommen zu werden braucht.

Vorteilhafte Ausgestaltungen der Erfindung sind in den Unteransprüchen definiert und ergeben sich aus der folgenden Beschreibung von Ausführungsbeispielen unter Bezugnahme auf die Zeichnungen. Es zeigen:

| | |
|---|---|
| Fig. 1 | eine Vorderansicht eines ersten Ausführungsbeispiels des erfindungsgemäßen Mittelteils; |
| Fig. 2 | eine Schnittdarstellung zu Fig. 1; |
| Fig. 3 | die Einzelheit X gemäß Fig. 2 in vergrößerter Darstellung, wobei zusätzlich ein in das Mittelteil eingesetztes Brillenglas ausschnittsweise dargestellt ist; |
| Fig. 4 | eine vergrößerte, ausschnittsweise Schnittdarstellung gemäß A-B in Fig. 1, wobei zusätzlich ein in das Mittelteil eingesetztes Brillenglas ausschnittsweise dargestellt ist; |
| Fig. 5 | eine vergrößerte Schnittdarstellung gemäß C-D in Fig. 1, wobei zusätzlich ein Stegbauteil dargestellt ist; |
| Fig. 6 | eine Vorderansicht von zwei Brillengläsern, die in das Mittelteil |

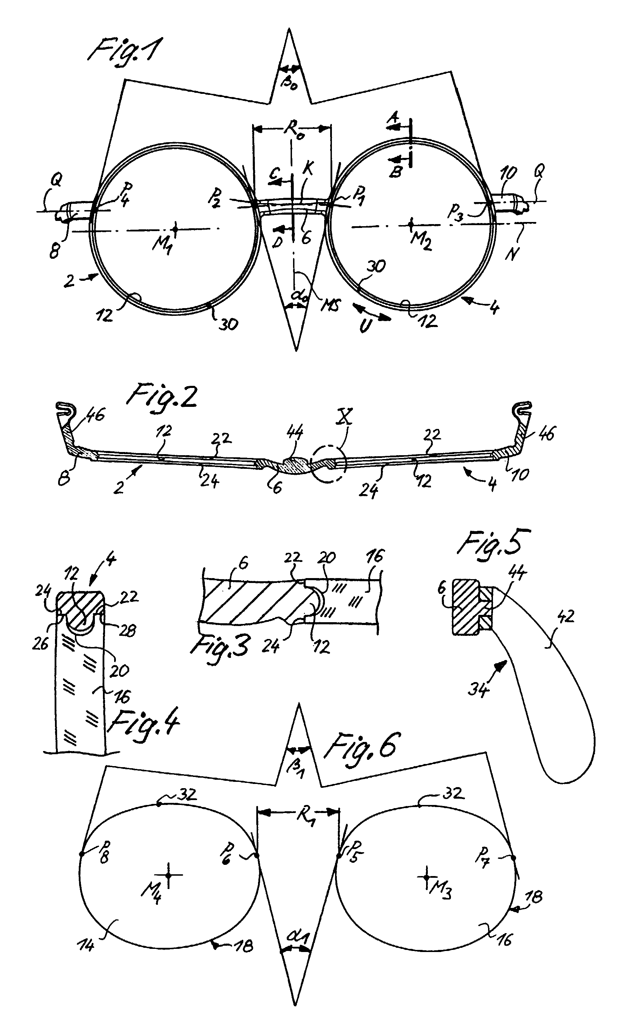

gemäß den Figuren 1 und 2 einsetzbar sind;

Fig. 7      eine perspektivische Darstellung von Bauteilen einer Brille, die unter Verwendung des Mittelteils gemäß den Figuren 1 und 2 sowie der Brillengläser gemäß Fig. 6 hergestellt wird;

Fig. 8      eine perspektivische Darstellung einer aus den Bauteilen gemäß Fig. 7 zusammengesetzten Brille;

Figuren 9 bis 11      in Fig. 6 ähnlicher Darstellung Brillengläser, die in das Mittelteil gemäß den Figuren 1 und 2 einsetzbar sind und sich hinsichtlich ihrer Scheibenform voneinander sowie von den Brillengläsern gemäß Fig. 6 unterscheiden;

Fig. 12      eine perspektivische, ausschnittsweise Darstellung eines zweiten Ausführungsbeispiels des erfindungsgemäßen Mittelteils;

Fig. 13      eine Schnittdarstellung gemäß E-F in Fig. 12, wobei zusätzlich ein Gelenkschenkel dargestellt ist;

Fig. 14      in Fig. 4 ähnlicher Darstellung einen Vollrand gemäß einem dritten Ausführungsbeispiel des erfindungsgemäßen Mittelteils;

Fig. 15      in Fig. 4 ähnlicher Darstellung einen Vollrand gemäß einem vierten Ausführungsbeispiel des erfindungsgemäßen Mittelteils;

Fig. 16      eine ausschnittsweise Vorderansicht des Mittelteils mit dem Vollrand gemäß Fig. 15, wobei zusätzlich ein in das Mittelteil eingesetztes Brillenglas ausschnittsweise dargestellt ist;

Fig. 17      eine Schnittdarstellung gemäß G-H in Fig. 16;

Fig. 18      eine Fig. 16 ähnliche Darstellung einer Abwandlung des Ausführungsbeispiels gemäß den Figuren 15 bis 17;

Fig. 19      eine Schnittdarstellung gemäß J-H in Fig. 18;

Fig. 20      eine Ansicht gemäß Y in Fig. 18, wobei das Brillenglas nicht dargestellt ist;

Fig. 21      eine Fig. 5 ähnliche Darstellung, die ein anderes Stegbauteil als Fig. 5 zeigt;

Fig. 22      in Fig. 4 ähnlicher Darstellung einen Vollrand gemäß einem fünften Ausführungsbeispiel des erfindungsgemäßen Mittelteils;

Fig. 23      in Fig. 4 ähnlicher Darstellung einen Vollrand gemäß dem sechsten Ausführungsbeispiel des erfindungsgemäßen Mittelteils; und

Fig. 24      in Fig. 4 ähnlicher Darstellung einen Vollrand gemäß einem siebten Ausführungsbeispiel des erfindungsgemäßen Mittelteils.

Die Figuren 1 bis 5 dienen zur Erläuterung eines ersten Ausführungsbeispiels eines erfindungsgemäßen Mittelteils einer Vollrandfassung für eine Brille. Dabei zeigen die Figuren 1 und 2 das Mittelteil allein. Fig. 2 ist ein Horizontalschnitt entlang einer Linie, die durch weiter unten erläuterte Mittellinien K und Q in Fig. 1 definiert ist. Die Figuren 3 bis 5 zeigen das Mittelteil zusammen mit weiteren Elementen, die im Zuge der Fertigung einer Brille unter Verwendung des dargestellten Mittelteils mit diesem zusammengefügt werden.

Das in den Figuren 1 und 2 dargestellte Mittelteil wird einstückig aus einem Kunststoff hergestellt, und zwar vorzugsweise im Spritzgießverfahren unter Verwendung eines thermoplastischen Kunststoffes. Die Auswahl eines geeigneten Kunststoffes erfolgt einerseits unter den für Brillenfassungskunststoffe üblichen Gesichtspunkten, zu denen die Forderung nach Hautverträglichkeit, Beständigkeit gegenüber Hautschweiß, hinreichender Formbeständigkeit bei den auftretenden Gebrauchstemperaturen sowie hinreichender Schlag-, Kerbschlag- und Kratzfestigkeit usw. gehören. Andererseits erfolgt die Auswahl des Kunststoffes unter Berücksichtigung des Gesichtspunktes, daß der Kunststoff eine hinreichende Flexibilität und Dauerelastizität von Vollrändern des Mittelteils gewährleisten soll. Als geeigneter Kunststoff hat sich beispielsweise ein Polyamid erwiesen, das von der Firma Hüls AG, Marl, Deutschland, unter der Bezeichnung "Trogamid" vertrieben wird. Geeignet sind beispielsweise auch Polyethersulfone, Polysulfone und deren Copolymerisate wie der von der Firma BASF, Ludwigshafen, Deutschland, unter der Bezeichnung ,,Ultrason" vertriebene Kunststoff.

Die Figuren 1 und 2 zeigen das Mittelteil im unbelasteten und unverformten Zustand, wie es gebrauchsfertig nach dem Spritzgießen (und einer gegebenenfalls notwendigen oder gewünschten Nachbehandlung durch Entgraten, Glätten usw.) vorliegt.

Das Mittelteil ist symmetrisch zu einer Symmetrieebene, die mit der Schnittebene C-D in Fig. 1 zusammenfällt und in der die Mittelsenkrechte MS des Mittelteils liegt. Das Mittelteil umfaßt einen linken Vollrand 2, einen rechten Vollrand 4, eine zwischen den beiden Vollrändern 2 und 4 angeordnete und diese miteinander verbindende Brücke 6 sowie eine linke Backe 8 und eine rechte Backe 10. Die Ausdrücke "links", "rechts", "oben" und "unten" sowie ähnliche Ausdrücke beziehen sich auf Fig. 1, soweit nicht etwas anderes gesagt ist. Die Backen 8 und 10 sind jeweils auf der von der Brücke 6 abgewandten Seite des Vollrandes 2 bzw. 4 angeordnet. Da das Mittelteil als ganzes spritzgegossen worden ist, sind die beiden Vollränder 2 und 4, die Brücke 6 und die beiden Backen 8 und 10 einstückig miteinander ausgebildet.

Jeder der beiden Vollränder 2 und 4 ist durch ein geschlossenes Band gebildet und stellt somit einen geschlossenen Ring dar, der beim dargestellten Ausführungsbeispiel Kreisform hat. Der Kunststoff, aus dem das Mittelteil besteht, und die Abmessungen des die Vollränder bildenden Bandes sind derart gewählt, daß das Band in Richtung seiner Längsachse und somit in Umfangsrichtung U des jeweiligen Vollrandes elastisch gedehnt werden kann und daß die Vollränder 2 und 4 so flexibel bzw. biegsam sind, daß die Gestalt der Vollränder verändert werden kann, ohne daß das Mittelteil zerstört oder beschädigt wird. Das Ausmaß der durch die Flexibilität gewährleisteten Veränderbarkeit der Gestalt bzw. Form der Vollränder ist derart, daß zumindest sowohl eine Halbierung als auch eine Verdoppelung der Krümmungsradien möglich ist, die der Vollrand im unbelasteten und unverformten Zustand hat. Diese Flexibilität bzw. Biegsamkeit haben die Vollränder entlang ihres gesamten Umfangs mit Ausnahme derjenigen Abschnitte, an denen die Vollränder durch die angeformte Brücke 6 und die angeformten Backen 8 und 10 versteift sind.

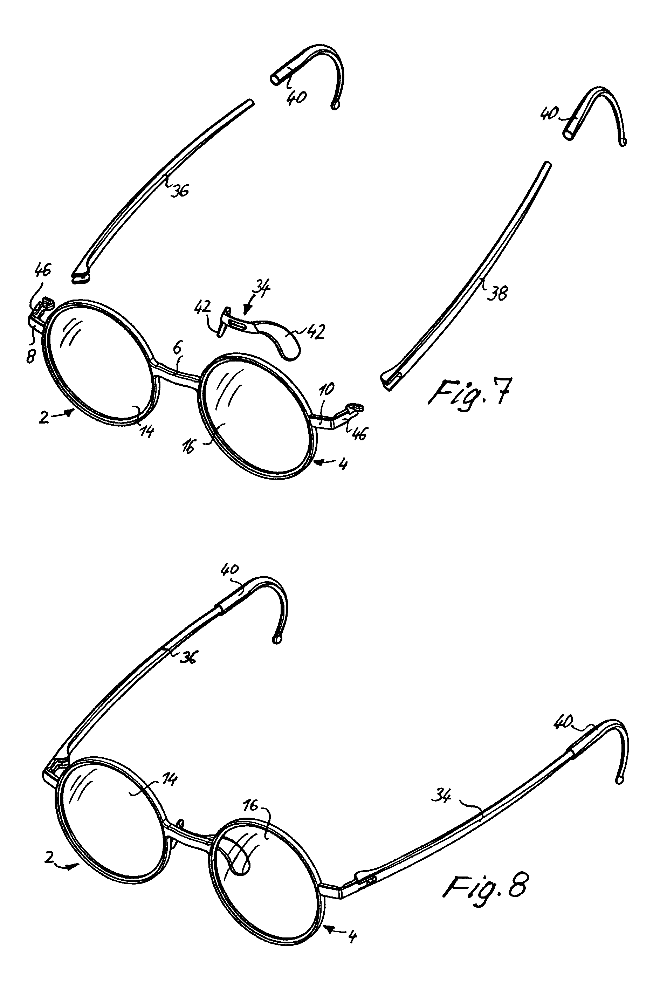

Jeder der beiden Vollränder 2 und 4 hat im Querschnitt, d.h. in einer zur Längsachse des den Vollrand 2 bzw. 4 bildenden Bandes senkrechten Schnittebene das in Fig. 4 gezeigte Profil. Dieses Profil ist im wesentlichen flach rechteckig. Auf der Innenseite jedes der beiden Vollränder 2 und 4 ist ein umlaufender, nach radial innen vorstehender Vorsprung 12 ausgebildet, der beim dargestellten Ausführungsbeispiel ein im wesentlichen halbkreisförmiges Profil hat, wie die Figuren 3 und 4 zeigen. Wenn in den Vollrand 2 bzw. 4 ein linkes Brillenglas 14 bzw. ein rechtes Brillenglas 16 (s. Fig. 6) eingesetzt ist, wie dies in den Figuren 3 und 4 gezeigt ist, steht der Vorsprung 12 in Eingriff mit einer am Rand 18 des jeweiligen Brillenglases ausgebildeten, umlaufenden Nut 20, die in dargestellter Weise vorzugsweise derart dimensioniert ist, daß der Vorsprung 12 nicht an ihrem Boden anliegt. Beiderseits des Vorsprungs 12 weist jeder der beiden Vollränder 2 und 4 auf seiner Innenseite umlaufende Stützflächen 22 und 24 auf, die an flachen Abschnitten 26 und 28 des Randes 18 der Brillengläser 16 und 14 anliegen, wie dies in den Figuren 3 und 4 gezeigt ist. Die beiden flachen Abschnitte 26 und 28 sind beiderseits der Nut 20 ausgebildet.

Bei dem dargestellten Ausführungsbeispiel ergibt die Projektion der beiden Stützflächen 22 und 24 in die Zeichenebene von Fig. 1 die innere Konturlinie 30 des jeweiligen Vollrandes und ergibt die Projektion der beiden flachen Randabschnitte 26 und 28 in eine zu den optischen Achsen der Brillengläser 14 und 16 senkrechte Ebene (dies ist die Zeichenebene von Fig. 6) die äußere Umfangslinie 32 des jeweiligen Brillenglases. Die inneren Konturlinien 30 sind beim dargestellten Ausführungsbeispiel des Mittelteils Kreise. Wie schon einleitend dargelegt worden ist, wird der Verlauf bzw. die Gestalt der äußeren Umfangslinie 32 üblicherweise und auch hier als Scheibenform bezeichnet. Da die Brillengläser unabhängig davon, ob sie aus Kunststoff oder Mineralglas bestehen, starre Körper sind, ist die Scheibenform von Brillengläsern unveränderbar, nachdem diese aus Brillen-Rohgläsern geschliffen worden sind. Dagegen sind die inneren Konturlinien 30 bei dem hier beschriebenen Mittelteil am fertigen Mittelteil veränderbar: Wegen der Flexibilität der Vollränder 2 und 4 kann die Gestalt der inneren Konturlinien 30 geändert werden, und wegen der Elastizität des die Vollränder bildenden Bandes kann die Länge der inneren Konturlinien 30 geändert werden.

Die Brücke 6 des in den Figuren 1 und 2 dargestellten Mittelteils ist als leicht gekrümmter Balken ausgebildet, dessen Mittellinie K in Fig. 1 eingezeichnet ist. Diese Mittellinie L schneidet die inneren Konturlinien 30 in Punkten, die hier als Brückenanschlußpunkte $P_1$ und $P_2$ bezeichnet werden und den Abstand R voneinander haben. Ferner sind in Fig. 1 die geometrischen Mittelpunkte $M_1$ und $M_2$ der beiden Vollränder 2 und 4 eingezeichnet. Eine die beiden geometrischen Mittelpunkte $M_1$ und $M_2$ verbindende Gerade bildet die Mittellinie N des Mittelteils. Beim dargestellten Ausführungsbeispiel liegen die beiden Brückenanschlußpunkte $P_1$ und $P_2$ oberhalb der Mittellinie N. Tangenten an die beiden inneren Konturlinien 30 in den Brückenanschlußpunkten $P_1$ und $P_2$ schließen einen Winkel ein, der hier als Brückenwinkel $\alpha_0$ bezeichnet wird. Beim dargestellten Ausführungsbeispiel hat der Brückenwinkel $\alpha_0$ den Wert 30° und der Abstand $R_0$ den Wert 18 mm.

Die beiden Backen 8 und 10 des Mittelteils sind jeweils als parallel zur Mittellinie N verlaufender, kurzer Balken ausgebildet. In Fig. 1 ist für jede der Backen 8 und 10 deren Mittellinie Q eingezeichnet. Diese Mittellinien Q schneiden die inneren Konturlinien 30 in Punkten, die hier als Backenanschlußpunkte $P_3$ und $P_4$ bezeichnet werden. Die Backenanschlußpunkte $P_3$ und $P_4$ liegen beim dargestellten Ausführungsbeispiel ebenso wie die Brückenanschlußpunkte $P_1$ und $P_2$ oberhalb der Mittellinie N und haben von dieser denselben Abstand wie die Brückenanschlußpunkte $P_1$ und $P_2$. An die inneren Konturlinien 30 in den Backenanschlußpunkten $P_3$ und $P_4$ angelegte Tangenten schließen einen hier als Backenwinkel $\beta_0$ bezeichneten Winkel ein. Wegen der Kreisform der beiden inneren Konturlinien 30 und wegen des für die Brückenanschlußpunkte $P_1$ und $P_2$ sowie die Backenanschlußpunkte $P_3$ und $P_4$ gleichen Abstandes von der Mittellinie N ist beim dargestellten Ausführungsbeispiel der Backenwinkel $\beta_0$ gleich dem Brückenwinkel $\alpha_0$ und beträgt daher ebenfalls 30°.

Bei dem vorstehend beschriebenen Mittelteil sind die beiden Brückenanschlußpunkte $P_1$ und $P_2$ sowie die beiden Backenanschlußpunkte $P_3$ und $P_4$ im gleichen Abstand oberhalb der Mittellinie N angeordnet. Dies ist jedoch kein notwendiges Merkmal des erfindungsgemäßen Mittelteils. Vielmehr kann sich der Abstand, den die Brückenanschlußpunkte $P_1$ und $P_2$ von der Mittellinie N haben, von demjenigen Abstand unterscheiden, den die Backenanschlußpunkte $P_3$ und $P_4$ von der Mittellinie haben. Ferner ist es nicht notwendig, daß die genannten Punkte oberhalb der Mittellinie N angeordnet sind.

Der Brückenanschlußpunkt und der Backenanschlußpunkt jedes der beiden Vollränder unterteilen dessen innere Konturlinie 30 in einen oberen Konturlinienabschnitt und einen unteren Konturlinienabschnitt, der sich - für den rechten Vollrand 4 - vom Brückenanschlußpunkt $P_1$ zum Backenanschlußpunkt $P_3$ entlang dem unteren Abschnitt des Vollrandes 4 erstreckt. Wenn $L_0$ als Gesamtlänge der inneren Konturlinie 30 bei unbelastetem, ungespanntem Mittelteil definiert wird und wenn $L_{ou}$ als Länge des unteren Konturlinienabschnitts zwischen den Punkten $P_1$ und $P_2$ unter denselben Bedingungen definiert wird, ergibt sich als Längenverhältnis dieser beiden Längen $\lambda = L_{ou}/L_o$.

Die beiden Vollränder 2 und 4 des Mittelteils sind dazu bestimmt, zwei Brillengläser aufzunehmen und in einer gewünschten Lage relativ zueinander zu halten. Die beiden in Fig. 6 gezeigten Brillengläser 16 und 14 sind ein Beispiel für Brillengläser, die mit Hilfe des Mittelteils gemäß den Figuren 1 und 2 in der Fig. 6 gezeigten Relativanordnung gehalten werden können. Wenn die Brillengläser 14 und 16 in die Vollränder 2 und 4 eingesetzt sind, stehen die Stützflächen 22 und 24 der Vollränder entlang des gesamten Umfangs des jeweiligen Brillenglases in Berührung mit dessen flachen Abschnitten 26 und 28, so daß die innere Konturlinie 30 des Vollrandes deckungsgleich mit der äußeren Umfangslinie 32 des jeweiligen Brillenglases ist. Es ist vorgesehen, daß die Vollränder um die Brillengläser gespannt sind. Daher hat die äußere Umfangslinie 32 der Brillengläser eine Gesamtlänge L1, die bestimmt ist durch

$$L_1 = L_0 \, (1+\varepsilon),$$

wobei $\varepsilon$ die gewünschte Dehnung des den jeweiligen Vollrand bildenden Bandes ist und definiert ist durch $\varepsilon = \Delta L_o/L_o$, wobei $\Delta L_o$ die Längenänderung ist, die an dem den Vollrand bildenden Band aufgrund des Einsetzens des Brillenglases bewirkt wird. Die Dehnung $\varepsilon$ wird unter Berücksichtigung der Werkstoffeigenschaften des Kunststoffes, aus dem das Mittelteil besteht, und der Abmessungen der Vollränder geeignet gewählt, wobei die Dehnung zweckmäßigerweise nicht größer ist, als zum zuverlässigen Festhalten der Brillengläser notwendig ist. Als geeignet haben sich Werte der Dehnung $\varepsilon$ zwischen 1% und 5% erwiesen.

In das vorstehend beschriebene Mittelteil können Brillengläser mit einer beliebigen Scheibenform eingesetzt werden, sofern deren äußere Umfangslinie ausschließlich konvex ist, die Länge $L_1 = L_o \, (1+\varepsilon)$ mit $\varepsilon > 0$ hat und keine größeren oder kleineren Krümmungen aufweist, als es die Flexibilität der Vollränder ohne wesentliche Beschädigung derselben zuläßt.

Beim Einsetzen der Brillengläser in die Vollränder wird das diese bildende Band gedehnt. Ferner wird dabei die Gestalt der inneren Konturlinien 30 der Vollränder 2 und 4 geändert, wenn sich die Scheibenform der Brillengläser von der Gestalt der inneren Konturlinien des unbelasteten und unverformten Mittelteils ohne Brillengläser unterscheidet. Das Einsetzen der Brillengläser in das Mittelteil verändert jedoch nicht Gestalt und Abmessungen von dessen Brücke 6, so daß am Mittelteil mit eingesetzten Brillengläsern sowohl der Brückenwinkel als auch der Abstand zwischen den Brückenanschlußpunkten $P_1$ und $P_2$ gleich sind wie bei dem unverformten Mittelteil. Ebenso ändert sich das Längenverhältnis $\lambda$ durch das Einsetzen der Brillengläser nicht. Dies bedeutet, daß am Brillen-Mittelteil - bestehend aus dem Mittelteil der Vollrandfassung und den eingesetzten Brillengläsern - die Brückenanschlußpunkte $P_1$ und $P_2$ des Mittelteils zusammenfallen mit zwei auf den äußeren Umfangslinien 32 einander gegenüberliegenden Punkten, die voneinander den durch das Mittelteil vorgegebenen Abstand $R_0$ haben und deren Tangenten den durch das Mittelteil vorgegebenen Brückenwinkel $\alpha_0$ einschließen. Dies wird im folgenden anhand von Fig. 6 beispielhaft erläutert.

Wie in Fig. 6 erkennbar ist, haben die zwei darin dargestellten Brillengläser 14 und 16 eine elliptische Scheibenform und somit eine äußere Umfangslinie 32, deren Gestalt sich von der kreisförmigen Gestalt der äußeren Umfangslinie 30 des unverformten Mittelteils gemäß den Figuren 1 und 2 unterscheidet. Die Länge $L_1$ der äußeren Umfangslinien 32 ist gemäß der vorstehend genannten Gleichung $L_1 = L_0(1+\varepsilon)$ mit $\varepsilon = 3{,}0\%$ gewählt. Auf den beiden äußeren Umfangslinien 32 lassen sich zwei bezüglich der senkrechten Symmetrieachse der dargestellten Brillenglasanordnung symmetrische, einander gegenüberliegende Punkte $P_5$ und $P_6$ finden, deren Tangenten einen Winkel $\alpha_1$ einschließen, der gleich dem Brückenwinkel $\alpha_0$ ist ($\alpha_1 = \alpha_0$). Die beiden Brillengläser 14 und 16 sind in einem solchen Abstand voneinander angeordnet, daß der Abstand $R_1$ zwischen den beiden Punkten $P_5$ und $P_6$ gleich $R_0$ ist ($R_1 = R_0$). Wenn die beiden Brillengläser 14 und 16 in das Mittelteil gemäß den Figuren 1 und 2 derart eingesetzt werden, daß der Punkt $P_5$ mit dem Brückenanschlußpunkt $P_1$ zusammenfällt und daß der Punkt $P_6$ mit dem Brückenanschlußpunkt $P_2$ zusammenfällt, werden die beiden Brillengläser vom Mittelteil genau in der in Fig. 6 dargestellten Relativanordnung gehalten. Dies ist eine unter optischen und anatomischen Gesichtspunkten sinnvolle Relativanordnung, bei der die Brücke 6 des Mittelteils zwischen den Punkten $P_5$ und $P_6$ und somit oberhalb

der durch geometrische Mittelpunkte $M_3$ und $M_4$ der Brillengläser definierten Mittellinie der dargestellten Brillenglasanordnung angeordnet ist.

Ein Punkt $P_7$ auf der äußeren Umfangslinie 32 des rechten Brillenglases 16 ist dadurch definiert, daß die Länge des unteren Umfangslinienabschnitts zwischen dem Punkt $P_5$ und dem Punkt $P_7$ gleich ($\lambda \cdot L1$) ist, wobei das Längenverhältnis $\lambda$ durch das Mittelteil vorgegeben ist. Entsprechendes gilt für einen Punkt $P_8$ auf der Umfangslinie des Brillenglases 14. Wenn die Brillengläser 14 und 16 in das Mittelteil eingesetzt sind, decken sich die Backenanschlußpunkte $P_3$ und $P_4$ des Mittelteils mit den Punkten $P_7$ und $P_8$. Diese Punkte liegen bei der Brillenglasanordnung gemäß Fig. 6 oberhalb von deren Mittellinie, so daß die Backen 10 am Brillen-Mittelteil ein unter anatomischen Gesichtspunkten sinnvolle Lage einnehmen. Zudem ist bei der Brillenglasanordnung gemäß Fig. 6 die Scheibenform derart gewählt, daß die Tangenten an den Punkten $P_7$ und $P_8$ einen Winkel $\beta_1$ einschließen, der gleich dem Backenwinkel $\beta_0$ ist ($\beta_1 = \beta_0$), so daß die Mittellinien Q der Backen 8 und 10 auch am Brillen-Mittelteil einen im wesentlichen waagerechten Verlauf haben, wie er in Fig. 1 gezeigt ist. Es ist allerdings nicht notwendig, daß der Winkel $\beta_1$ gleich dem Backenwinkel $\beta_0$ ist, da es zulässig ist, wenn die Mittellinien Q der Backen 8 und 10 am Brillen-Mittelteil nach oben oder unten geneigt verlaufen.

Im Zuge der Herstellung einer Brille unter Verwendung des Mittelteils gemäß den Figuren 1 und 2 und der Brillenglasanordnung gemäß Fig. 6 werden die beiden Brillengläser 14 und 16 in die Vollränder 2 und 4 derart eingesetzt, daß die Punkte $P_5$ und $P_6$ zur Deckung mit den Brückenanschlußpunkten $P_1$ und $P_2$ kommen. Dabei wird der Vorsprung 12 des jeweiligen Vollrandes über einen der beiden flachen Abschnitte 26 und 28 des Randes 18 des Brillenglases geschoben, bis der Vorsprung 12 in die Nut 20 des Brillenglases eingreift bzw. einrastet, so daß sich der in den Figuren 3 und 4 gezeigte Zustand ergibt. Während dieses Montagevorgangs wird das den jeweiligen Vollrand bildende Band gedehnt und paßt sich der Vollrand in seiner Gestalt der Scheibenform der Brillengläser 14 und 16 an. Das Mittelteil der Vollrandfassung hält dann die beiden Brillengläser in der in Fig. 6 gezeigten Relativanordnung.

Das auf diese Weise montierte Brillen-Mittelteil - bestehend aus dem Mittelteil der Vollrandfassung und den eingesetzten Brillengläsern - ist in Fig. 7 perspektivisch dargestellt zusammen mit weiteren Bauteilen der Brille. Bei diesen handelt es sich um ein Stegbauteil 34, einen linken Bügelschaft 36, einen rechten Bügelschaft 38 sowie zwei Bügelendstücke 40. Das Stegbauteil 34 ist ein aus Kunststoff gefertigtes Bauteil und umfaßt zwei Seitenstege 42, die mittels eines Verbindungsabschnitts miteinander verbunden sind. Der Verbindungsabschnitt des Stegbauteils 34 wird mit einer Leiste 44 verrastet, die an der Brücke 6 angeformt ist (siehe Fig. 5). Diese Verbindung kann beispielsweise mittels eines Klebers fixiert werden. An jeder der beiden Backen 8 und 10 des Mittelteils ist unmittelbar ein Gelenkschenkel 46 angeformt. Jeder der beiden Gelenkschenkel 46 wird mit einem komplementären Gelenkschenkel am vorderen Ende des jeweiligen Bügelschaftes 36 bzw. 38 in Eingriff gebracht, so daß sich ein Gelenk ergibt, wie es in der deutschen Patentanmeldung 197 21 306.5 beschrieben ist. Auf die hinteren Enden der Bügelschäfte 36 und 38 werden die Bügelendstücke 40 aufgesteckt. Die fertige Brille hat dann das Aussehen gemäß Fig. 8. Diese Brille weist eine Vollrandfassung auf, bei der die Scheibenform der Brillengläser nicht durch die Gestalt der Vollränder des Mittelteils der Vollrandfassung vorgegeben ist, sondern die Vollränder in ihrer Gestalt der Scheibenform der Brillengläser angepaßt sind.

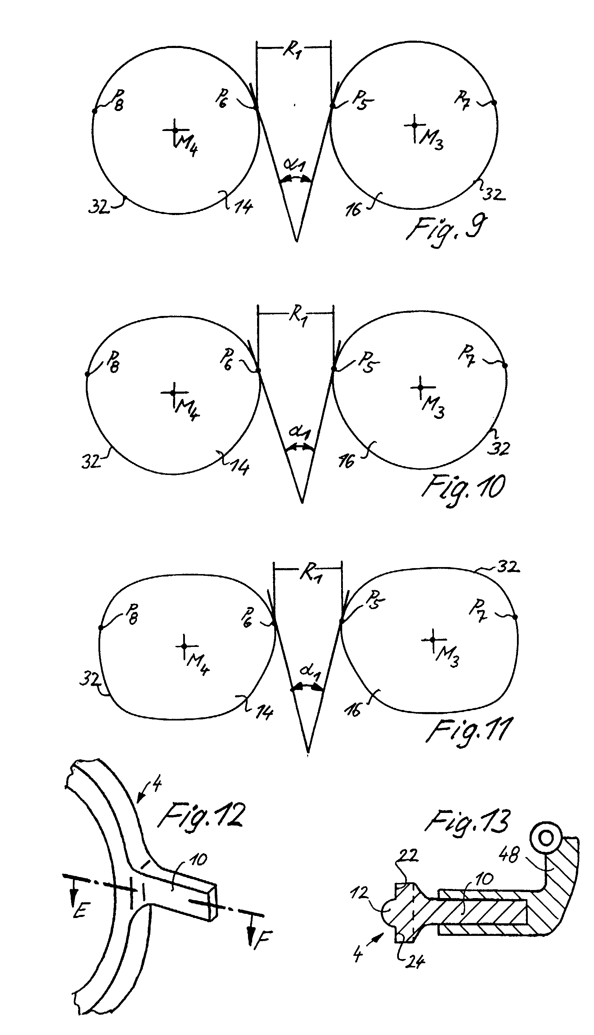

Fig. 6 zeigt lediglich ein Beispiel für eine Brillenglasanordnung, die mit Hilfe des Mittelteils gemäß den Figuren 1 und 2 gehalten werden können. Weitere Beispiele für Scheibenformen und Relativanordnungen von Brillengläsern, die mit Hilfe des erläuterten Mittelteils gehalten werden können, zeigen die Figuren 9 bis 11. Fig. 9 zeigt eine Brillenglasanordnung, bei der die Scheibenform kreisförmig ist. Fig. 10 zeigt eine Brillenglasanordnung, deren Scheibenform als pantoskopisch bezeichnet wird. Fig. 11 zeigt eine Brillenglasanordnung, deren Scheibenform als anatomisch bezeichnet wird. Für die in den Figuren 9 bis 11 eingezeichneten Punkte $P_5$ und $P_6$, $P_7$ und $P_8$, den Winkel $\alpha_1$ und den Abstand $R_1$ gilt die Erläuterung der Brillenglasanordnung gemäß Fig. 6. Den Brillenglasanordnungen gemäß den Figuren 9 bis 11 ist gemeinsam, daß die Länge der äußeren Umfangslinie der beiden Brillengläser $L_1 = L_0$ $(1+\varepsilon)$ mit $\varepsilon > 0$ beträgt, daß $\alpha_1 = \alpha_0$ ist und daß $R_1 = R_0$ ist. Es können daher die Brillenglasanordnungen gemäß Fig. 6 und die gemäß den Figuren 9 bis 11 von dem gleichen, anhand der Figuren 1 bis 4 vorstehend ausführlich erläuterten Mittelteil aufgenommen werden. Die Vollränder des Mittelteils der Vollrandfassung passen sich jeweils der Scheibenform der Brillengläser der gewünschten Brillenglasanordnungen an. Es ist somit ein und dasselbe Mittelteil zur Aufnahme von Brillenglasanordnungen mit voneinander verschiedenen Scheibenformen geeignet.

Es versteht sich, daß nicht nur Brillenglasanordnungen mit den Scheibenformen gemäß den Figuren 6 und 9 bis 11 in das gleiche Mittelteil einsetzbar sind. Vielmehr gibt es zahlreiche weitere, jedoch nicht dargestellte Scheibenformen und Brillenglasanordnungen die von dem gleichen Mittelteil gehalten werden können.

Bei dem vorstehend anhand der Figuren 1 und 2 erläuterten Mittelteil sind die Vollränder im unbelasteten und unverformten Zustand kreisförmig. Diese Kreisform bleibt erhalten, wenn in das Mittelteil die Brillengläser gemäß Fig. 9 eingesetzt werden; die Kreisform wird verändert, wenn in das Mittelteil die Brillengläser gemäß Fig. 6 oder gemäß Fig. 10 oder gemäß Fig. 11 eingesetzt werden. Es ist jedoch kein notwendiges Merkmal der Erfindung, daß die Vollränder des unbelasteten und unverformten Mittelteils eine Kreisform haben. Vielmehr kann das Mittelteil hergestellt werden mit anders gestalteten Vollrändern, deren Gestalt beispielsweise der Scheibenform gemäß Fig. 10 entspricht. In diesem Fall würde die Gestalt der Vollränder sich nicht ändern, wenn die Brillengläser mit der Scheibenform gemäß Fig. 10 eingesetzt werden. (Allerdings ändert sich dabei die Länge der inneren Konturlinie von $L_0$ zu $L_1$). Die Gestalt der Fassungsränder würde sich jedoch ändern, wenn die Brillengläser gemäß Fig. 6 oder gemäß Fig. 9 oder gemäß Fig. 11 eingesetzt werden.

Bei dem ersten Ausführungsbeispiel des Mittelteils sind an den Backen 8 und 10 die Gelenkschenkel 46 unmittelbar angeformt. Abweichend von dieser Ausbildung ist bei einem in den Figuren 12 und 13 dargestellten zweiten Ausführungsbeispiel des Mittelteils vorgesehen, daß jede der Backen 10 und 8 als Zapfen ausgebildet ist und daß an dem Zapfen ein separat gefertigter Gelenkschenkel 48 befestigt ist, wie dies schematisch in Fig. 13 gezeigt ist. Im Falle des zweiten Ausführungsbeispiels ist die Herstellung des Spritzgießwerkzeugs für das Mittelteil vereinfacht.

Fig. 14 zeigt in einer Fig. 4 ähnlichen Darstellung das Profil der Vollränder bei einem dritten Ausführungsbeispiel des Mittelteils. In diesem Fall ist das Profil durch zwei Halbkreise mit unterschiedlichen Radien und zwei die Halbkreise verbindenden Geraden definiert, wobei der Halbkreis mit dem kleineren Radius auf der Innenseite des Vollrandes angeordnet ist. Der Vollrandabschnitt, dessen Profil durch den Halbkreis mit dem kleineren Radius definiert ist, bildet den Vorsprung 12 des Vollrandes, der bei eingesetzten Brillengläsern in deren Nut 20 eingreift. Die Geraden des Profils liegen an den Stützflächen 22 und 28 des Vollrandes. Der Vollrand mit dem Profil gemäß Fig. 14 ist auf seiner Außenseite entsprechend dem Halbkreis mit dem größeren Radius gerundet und insofern vorteilhaft, als er kaum Angriffsflächen für von außen auf den Vollrand wirkende Kräfte bietet, die diesen aus seinem Eingriff mit der Nut 20 hebeln könnten.

Die Figuren 15 bis 17 erläutern ein viertes Ausführungsbeispiel, bei dem das Profil der Vollränder kreisförmig ist. In diesem Fall weist der Vollrand keine den Stützflächen 22 und 24 entsprechenden Stützflächen auf. Der radial innen liegende Abschnitt des Vollrandes bildet dessen Vorsprung 12, der in diesem Fall am Boden der Nut 20 anliegt. Die Tiefe der Nut 20 ist vorzugsweise etwas größer als der Radius des kreisförmigen Profils.

Bei dem vierten Ausführungsbeispiel bilden die der Brücke 6 benachbarten Abschnitte 50 des jeweiligen Vollrandes Torsionsfedern, die eine gewisse Schwenkbewegung des Brillenglases bezüglich der Brücke 6 zulassen, wie dies für das rechte Brillenglas 16 durch einen Doppelpfeil Z in Fig. 17 angedeutet ist. Dadurch ist zwar die Steifigkeit des Brillen-Mittelteils verringert. Vorteilhaft ist jedoch, daß die Brille bei einem Stoß beispielsweise gegen eine der Backen im Sinne der genannten Schwenkbewegung nachgeben kann, wodurch sowohl der Gefahr der Zerstörung der Brille als auch der Gefahr von Verletzungen des Brillenträgers vorgebeugt ist.

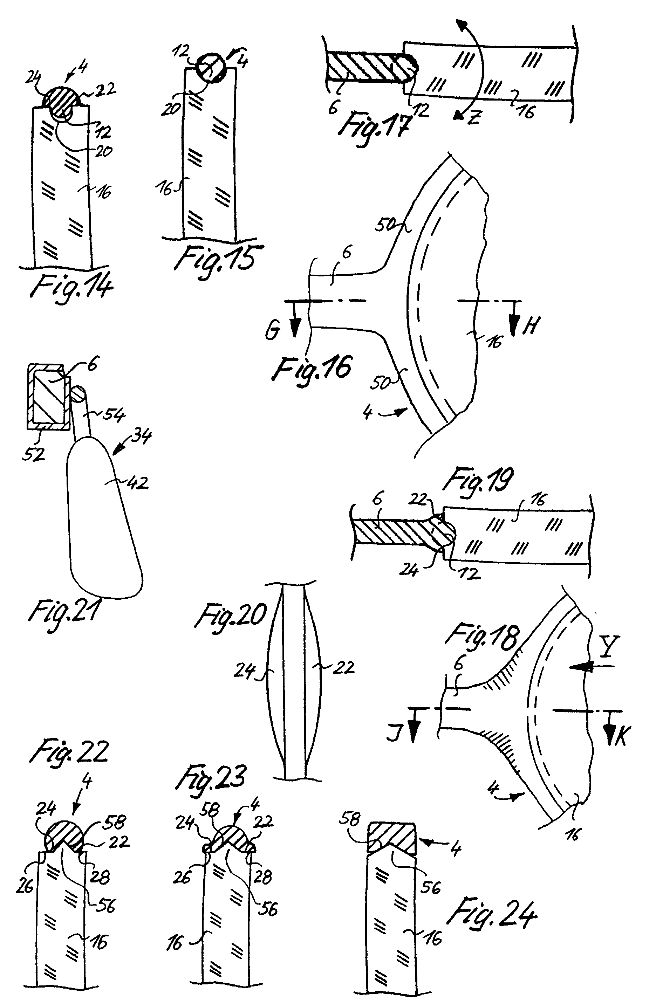

Wenn die Steifigkeit des Brillen-Mittelteils höher als bei dem vierten Ausführungsbeispiel sein soll, kann dieses in der Weise abgewandelt sein, wie dies in den Figuren 18 bis 20 gezeigt ist. Bei der Abwandlung gemäß diesen Figuren ist das Mittelteil im Übergangsbereich zwischen der Brücke 6 und dem jeweiligen Vollrand sowohl in radialer Richtung als auch in Tiefenrichtung verdickt. Diese Verdickung ist in den Figuren 19 und 20 unmittelbar erkennbar und in Fig. 18 durch Schraffur verdeutlicht. An der Verdickung sind die zwei Stützflächen 22 und 24 ausgebildet, die wie bei dem ersten Ausführungsbeispiel am Rand des jeweiligen Brillenglases anliegen, sich jedoch abweichend vom ersten Ausführungsbeispiel nicht über den gesamten Umfang der Brillengläser erstrecken. Auf ähnliche Weise, wie dies in den Figuren 18 bis 20 für den Übergangsbereich zwischen der Brücke und dem Vollrand gezeigt ist, kann auch im Übergangsbereich zwischen der Backe und dem jeweiligen Vollrand eine Verdickung vorgesehen sein, die mit den Stützflächen 22 und 24 ähnlichen Stützflächen am Rand des Brillenglases anliegt.

Fig. 21 zeigt eine Alternative zu der Ausbildung gemäß Fig. 5. Bei der Ausbildung gemäß Fig. 21 ist an der Brücke 6 nicht die Leiste 44 angeformt. Das Stegbauteil 34 besteht in diesem Fall aus einer geschlitzten, um die Brücke 6 gebogenen Hülse 52 aus Metall, an deren Rückseite ein U-förmiger Bügel 54 aus Draht angelötet ist, der an seinen unteren, freien Enden zwei Seitenstege trägt, von denen in Fig. 21 lediglich der rechte Seitensteg 42 sichtbar ist. Das in Fig. 21 gezeigte Stegbauteil 34 versteift das Brillen-Mittelteil im Bereich der Brücke 6.

Bei den vorstehend beschriebenen Ausführungsbeispielen weist jeder der beiden Vollränder auf seiner Innenseite den umlaufenden Vorsprung 12 auf, der zum Eingriff mit der am Rand 18 des jeweiligen Brillenglases ausgebildeten Nut 20 bestimmt ist. Alternativ hierzu kann im Rahmen der Erfindung vorgesehen sein, daß jeder der beiden Vollränder 2 und 4 auf seiner Innenseite eine umlaufende Nut aufweist, die zum Eingriff mit einem am Rand des jeweiligen Brillenglases ausgebildeten, umlaufenden Vorsprung bestimmt ist. Beispiele hierfür zeigen die Figuren 22 bis 24.

Bei dem Ausführungsbeispiel gemäß Fig. 22 ist am Rand des Brillenglases 16 ein um dessen gesamten Umfang umlaufender Vorsprung 56 mit einem dreieckigen Profil ausgebildet, an den sich beiderseits die flachen Abschnitte 26 und 28 des Randes anschließen. Ein solcher Vorsprung 56 wird in der Brillenoptik als in der Mitte liegende Spezialfacette bezeichnet. Bei dem Brillenglas mit dem Vorsprung 56 ist dessen äußere Umfangslinie 32 und somit dessen Scheibenform durch den Verlauf der radial äußeren Kante des Vorsprungs 56 bestimmt. Der Vollrand 4 (und auch der nicht dargestellte linke Vollrand 2) haben bei dem Ausführungsbeispiel gemäß Fig. 22 das dargestellte, im wesentlichen kreisförmige Profil. Auf der Innenseite des Vollrandes 4 ist eine umlaufende Nut 58 ausgebildet, die in Eingriff mit dem umlaufenden Vorsprung 56 steht. Beiderseits der Nut 58 sind an dem Vollrand 4 die Stützflächen 22 und 24 ausgebildet, die an den flachen Abschnitten 26 und 28 anliegen. Der Vollrand mit dem Profil gemäß Fig. 22 zeichnet sich durch besonders geringes Volumen bei hinreichendem Schutz des Randes des eingesetzten Brillenglases aus.

Das sechste Ausführungsbeispiel gemäß Fig. 23 unterscheidet sich vom fünften Ausführungsbeispiel gemäß Fig. 22 allein durch das Profil des Vollrandes. Dieses Profil ist, wie dargestellt, hutförmig, so daß die Stützflächen 22 und 24 im Vergleich zum fünften Ausführungsbeispiel verbreitert sind.

Bei dem siebenten Ausführungsbeispiel gemäß Fig. 24 ist der am Brillenglas umlaufende Vorsprung 56 als sogenannte Spitzfacette ausgebildet, deren Flanken bis zur Vorderseite und Rückseite des Brillenglases verlaufen, so daß der Rand des Brillenglases keine flachen Abschnitte aufweist. Der Vollrand hat ein im wesentlichen rechteckiges Profil und weist auf seiner Innenseite die umlaufende Nut 58 auf, deren Profil in Anpassung an den Vorsprung 56 dreieckig ist.

Bei den Ausführungsbeispielen gemäß den Figuren 22 bis 24 verläuft die innere Konturlinie des jeweiligen Vollrandes entlang dem Boden der im Vollrand ausgebildeten Nut 58. Wie bei dem ersten bis vierten Ausführungsbeispiel des Mittelteils paßt sich die Gestalt dieser inneren Konturlinie beim Einsetzen des Brillenglases der Gestalt der äußeren Umfangslinie desselben an.

Bei allen vorstehend beschriebenen Ausführungsbeispielen des Mittelteils reichen der Formschluß und/oder der Kraftschluß zwischen den Vollrändern und den Rändern der Brillengläser normalerweise aus, um für eine hinreichende Festhaltung der Brillengläser im Mittelteil zu sorgen. Es kann jedoch vorgesehen sein, daß die Brillengläser im Mittelteil durch zusätzliche Maßnahmen, beispielsweise mittels eines Klebers, fixiert werden.

Die Erfindung ist nicht auf die vorstehend beschriebenen Ausführungsbeispiele beschränkt. Vielmehr kann die Erfindung gemäß Patentanspruch 1 auch auf andere Weisen realisiert werden, als sie vorstehend beschrieben sind.

Das erfindungsgemäße Mittelteil einer Vollrandfassung für eine Brille umfaßt einen linken Vollrand zum Aufnehmen eines linken Brillenglases, einen rechten Vollrand zum Aufnehmen eines rechten Brillenglases, eine die beiden Vollränder verbindende Brücke sowie zwei Backen. Die beiden Vollränder, die Brücke und die beiden Backen sind einstückig miteinander aus einem Kunststoff ausgebildet. Die beiden Vollränder sind flexibel und werden durch ein geschlossenes, elastisches Band gebildet. Das Mittelteil der Vollrandfassung wird zu einem Brillen-Mittelteil mit zwei Brillengläsern zusammengefügt, deren äußere Umfangslinien ein gewisses Übermaß im Vergleich zu den inneren Konturlinien der beiden Vollränder haben, so daß die Vollränder am Brillen-Mittelteil um die Brillengläser gespannt sind und sich ihre Gestalt der Scheibenform der Brillengläser anpaßt.

Das Mittelteil einer Vollrandfassung für eine Brille umfaßt einen linken Vollrand (2) zum Aufnehmen eines linken Brillenglases, einen rechten Vollrand (4) zum Aufnehmen eines rechten Brillenglases, eine die beiden Vollränder verbindende Brücke (6) sowie zwei Backen (8, 10). Die beiden Vollränder, die Brücke und die beiden Backen sind einstückig miteinander aus einem Kunststoff ausgebildet. Die beiden Vollränder (2, 4) sind flexibel und werden durch ein geschlossenes, elastisches Band gebildet. Das Mittelteil der Vollrandfassung wird zu einem Brillen-Mittelteil mit zwei Brillengläsern zusammengefügt, deren äußere Umfangslinien ein gewisses Übermaß im Vergleich zu den inneren Konturlinien der beiden Vollränder haben, so daß die Vollränder am Brillen-Mittelteil um die Brillengläser gespannt sind und sich ihre Gestalt der Scheibenform der Brillengläser anpaßt.

**Patentansprüche**

1.  Mittelteil einer Vollrandfassung für eine Brille, mit einem linken Vollrand (2) zum Aufnehmen eines linken Brillenglases (14), einem rechten Vollrand (4) zum Aufnehmen eines rechten Brillenglases (16), einer die beiden Vollränder verbindenden Brücke (6) sowie zwei Backen (8, 10), von denen jeweils eine an jedem Vollrand auf dessen von der Brücke abgewandter Seite angeordnet ist, wobei die beiden Vollränder, die Brücke und die beiden Backen einstückig miteinander ausgebildet sind und aus einem Kunststoff bestehen, dadurch gekennzeichnet, daß die beiden Vollränder (2, 4) flexibel sind und durch ein geschlossenes, elastisches Band gebildet sind.

2.  Mittelteil nach Anspruch 1, dadurch gekennzeichnet, daß die beiden Vollränder (2, 4) auf ihrer Innenseite einen umlaufenden Vorsprung (12) aufweisen, der zum Eingriff mit einer am Rand (18) des jeweiligen Brillenglases (14, 16) ausgebildeten, umlaufenden Nut (20) bestimmt ist.

3.  Mittelteil nach Anspruch 2, dadurch gekennzeichnet, daß der Vorsprung (12) ein im wesentlichen halbkreisförmiges Profil hat.

4.  Mittelteil nach Anspruch 3, dadurch gekennzeichnet, daß die beiden Vollränder (2, 4) ein im wesentlichen kreisförmiges Profil haben.

**5.** Mittelteil nach Anspruch 2 oder 3, dadurch gekennzeichnet, daß die beiden Vollränder (2, 4) ein im wesentlichen rechteckiges Profil haben.

**6.** Mittelteil nach Anspruch 3, dadurch gekennzeichnet, daß die beiden Vollränder (2, 4) ein Profil haben, das durch zwei Halbkreise mit unterschiedlichen Radien und zwei die Halbkreise verbindenden Geraden definiert ist, wobei der Halbkreis mit dem kleineren Radius auf der Innenseite des Vollrandes angeordnet ist.

**7.** Mittelteil nach Anspruch 1, dadurch gekennzeichnet, daß die beiden Vollränder (2, 4) auf ihrer Innenseite eine umlaufende Nut (58) aufweisen, die zum Eingriff mit einem am Rand (18) des jeweiligen Brillenglases (14, 16) ausgebildeten, umlaufenden Vorsprung (56) bestimmt ist.

**8.** Mittelteil nach Anspruch 7, dadurch gekennzeichnet, daß die umlaufende Nut (58) ein dreieckiges Profil hat.

**9.** Mittelteil nach Anspruch 7 oder 8, dadurch gekennzeichnet, daß die beiden Vollränder (2, 4) ein im wesentlichen kreisförmiges Profil haben.

**10.** Mittelteil nach Anspruch 7 oder 8, dadurch gekennzeichnet, daß die beiden Vollränder (2, 4) in im wesentlichen rechteckiges Profil haben.

**11.** Mittelteil nach Anspruch 7 oder 8, dadurch gekennzeichnet, daß die beiden Vollränder (2, 4) ein im wesentlichen hutförmiges Profil haben.

**12.** Mittelteil nach einem der Ansprüche 1 bis 11, dadurch gekennzeichnet, daß das Profil jedes der beiden Vollränder (2, 4) über dessen gesamten Umfang gleiche Abmessungen hat.

**13.** Mittelteil nach einem der Ansprüche 1 bis 11, dadurch gekennzeichnet, daß jeder der beiden Vollränder (2, 4) zumindest im Bereich der Brücke (6) und/oder im Bereich der Backe (8, 10) Stützflächen (22, 24) aufweist, die zur Anlage an flachen Abschnitten (26, 28) des Randes (18) des jeweiligen Brillenglases (14, 16) bestimmt sind.

**14.** Mittelteil nach einem der Ansprüche 1 bis 13, dadurch gekennzeichnet, daß an den beiden Backen (8, 10) jeweils ein Gelenkschenkel (46) eines Brillengelenks angeformt ist.

**15.** Mittelteil nach einem der Ansprüche 1 bis 13, dadurch gekennzeichnet, daß jede der beiden Backen (8, 10) als Zapfen ausgebildet ist und daß an dem Zapfen ein separat gefertigter Gelenkschenkel (48) eines Brillengelenks befestigt ist.

**16.** Mittelteil nach einem der Ansprüche 1 bis 15, dadurch gekennzeichnet, daß an der Brücke (6) ein separat gefertigtes Stegbauteil (34) befestigt ist.

**17.** Mittelteil nach einem der Ansprüche 1 bis 16, dadurch gekennzeichnet, daß der Kunststoff ein Polyamid ist.

**18.** Verfahren zur Herstellung eines Brillen-Mittelteils, das aus einem linken Brillenglas (14) und einem rechten Brillenglas (16) sowie einem Mittelteil einer Vollrandfassung besteht,

wobei das Mittelteil der Vollrandfassung einen linken geschlossenen Vollrand (2) zum Aufnehmen des linken Brillenglases (14), einen rechten geschlossenen Vollrand (4) zum Aufnehmen des rechten Brillenglases (16), eine die beiden Vollränder verbindende Brücke (6) sowie zwei Backen (8, 10) aufweist, von denen jeweils eine an jedem Vollrand auf dessen von der Brücke abgewandter Seite angeordnet ist, wobei das Verfahren die Schritte umfaßt, daß das Mittelteil der Vollrandfassung einstückig im Spritzgießverfahren aus einem Kunststoff derart gefertigt wird, daß die beiden Vollränder jeweils flexibel sind, daß die zwei Brillengläser aus zwei Brillen-Rohgläsern durch Ausbilden einer gewählten Scheibenform an den Brillen-Rohgläsern gefertigt werden, und daß die zwei Brillengläser in die beiden Vollränder des Mittelteils der Fassung derart eingesetzt werden, daß die Vollränder um das jeweilige Brillenglas herum entlang dessen Umfang elastisch gespannt sind,

**dadurch gekennzeichnet, daß**

daß im Zuge der Fertigung des Mittelteils der Vollrandfassung die Vollränder (2, 4) als elastische Bänder ausgebildet werden, und daß das Mittelteil der Vollrandfassung mit einem Verlauf der inneren Konturlinie (30) der Vollränder (2, 4) gefertigt wird, der von der Scheibenform der Brillengläser (14, 16) verschieden ist, so daß erst durch das Einsetzen der Brillengläser den beiden Vollrändern der endgültige Verlauf ihrer inneren Konturlinie (30) und somit ihre Gestalt aufgeprägt wird.

Fig.1

Fig.2

Fig.3

Fig.4

Fig.5

Fig.6

Fig. 7

Fig. 8

Fig. 9

Fig. 10

Fig. 11

Fig. 12

Fig. 13

Fig.14

Fig.15

Fig.17

Fig.16

Fig.19

Fig.21

Fig.20

Fig.18

Fig.22

Fig.23

Fig.24

| Europäisches Patentamt | **EUROPÄISCHER RECHERCHENBERICHT** | Nummer der Anmeldung EP 99 12 1035 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 646 824 A (HUANG CHIEN HSING) 5. April 1995 (1995-04-05) | 1-3 | G02C1/06 |
| A | * Spalte 2, Zeile 22 – Spalte 5, Zeile 1 * | 4-16 | |
| A | FR 2 577 691 A (BEAUVERGER BERNARD) 22. August 1986 (1986-08-22) * Zusammenfassung * | 1,17,18 | |
| A | EP 0 083 918 A (SCHMIED SILHOUETTE BRILLEN) 20. Juli 1983 (1983-07-20) * Seite 3, Zeile 1 – Zeile 33 * | 1,2,18 | |
| A | FR 1 257 060 A (G. LISSAC) 12. Juli 1961 (1961-07-12) * das ganze Dokument * | 1,7-11 | |
| A | PATENT ABSTRACTS OF JAPAN vol. 010, no. 183 (P-472), 26. Juni 1986 (1986-06-26) & JP 61 029817 A (SUEHIRO SAKURAI), 10. Februar 1986 (1986-02-10) * Zusammenfassung * | 1 | |

RECHERCHIERTE SACHGEBIETE (Int.Cl.7)

G02C

Der vorliegende Recherchenbericht wurde für alle Patentansprüche erstellt

| Recherchenort DEN HAAG | Abschlußdatum der Recherche 2. Februar 2000 | Prüfer CALLEWAERT, H |

## ANHANG ZUM EUROPÄISCHEN RECHERCHENBERICHT
## ÜBER DIE EUROPÄISCHE PATENTANMELDUNG NR.

EP 99 12 1035

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2000

| Im Recherchenbericht angeführtes Patentdokument | | Datum der Veröffentlichung | Mitglied(er) der Patentfamilie | | Datum der Veröffentlichung |
|---|---|---|---|---|---|
| EP 0646824 | A | 05-04-1995 | AT | 152251 T | 15-05-1997 |
| | | | DE | 59306281 D | 28-05-1997 |
| | | | DK | 646824 T | 03-11-1997 |
| | | | GR | 3024176 T | 31-10-1997 |
| FR 2577691 | A | 22-08-1986 | KEINE | | |
| EP 0083918 | A | 20-07-1983 | AT | 374010 B | 12-03-1984 |
| | | | AT | 7882 A | 15-07-1983 |
| | | | AU | 547939 B | 14-11-1985 |
| | | | AU | 1027383 A | 21-07-1983 |
| | | | CA | 1200996 A | 25-02-1986 |
| | | | HK | 56686 A | 08-08-1986 |
| | | | JP | 58130317 A | 03-08-1983 |
| | | | KR | 8601986 B | 07-11-1986 |
| | | | SG | 9386 G | 03-07-1987 |
| FR 1257060 | A | 12-07-1961 | KEINE | | |
| JP 61029817 | A | 10-02-1986 | KEINE | | |

EPO FORM P0461

Für nähere Einzelheiten zu diesem Anhang : siehe Amtsblatt des Europäischen Patentamts, Nr.12/82